# EUROPÄISCHE PATENTSCHRIFT

(11) **EP 1 452 739 B1**
(45) Veröffentlichungstag und Bekanntmachung des Hinweises auf die Patenterteilung: **17.09.2014**
(21) Anmeldenummer: 03004128.9
(22) Anmeldetag: 26.02.2003
(51) Int. Cl.: F04D 15/00, F04D 29/42, H04B 5/02

(54) **Pumpensteuerungsschnittstelle**
Pump-controller interface
Interface pour dispositif de commande d'une pompe

(43) Veröffentlichungstag der Anmeldung: 01.09.2004
(73) Patentinhaber: GRUNDFOS A/S, 8850 Bjerringbro (DK)
(72) Erfinder: Rannestad, Bjorn, 9000 Aalborg (DK); Bomholt, John, 8382 Hinnerup (DK); Ostergaard Nielsen, Lars, 8900 Randers (DK)
(74) Vertreter: Hemmer, Arnd

(56) Entgegenhaltungen:
- EP-A- 0 355 255
- EP-A- 0 664 399
- WO-A-01/86831
- DE-A- 10 009 240
- US-A- 5 521 592
- US-A- 5 887 430
- US-A1- 2001 020 148
- PATENT ABSTRACTS OF JAPAN vol. 2000, no. 12, 3. Januar 2001 (2001-01-03) -& JP 2000 260643 A (NITTO KOHKI CO LTD), 22. September 2000 (2000-09-22)

## Beschreibung

Die Erfindung betrifft eine Pumpe mit einem elektrischen Antrieb, beispielsweise eine Umwälzpumpe für Heizungsanlagen.

Moderne Pumpen weisen häufig Zusatzmodule auf, welche in die Pumpensteuerung, beispielsweise den Klemmenkasten, eingesetzt werden können, um verschiedene optionale Steuerungs- oder Auswertfunktionen bereitstellen zu können. Dies ermöglicht, die Pumpe individuell an verschiedene Kundenwünsche und Einsatzzwecke anpassen zu können. So können verschiedene Zusatzmodule, welche optionale Zusatzfunktionen bereitstellen, in den Klemmenkasten einer Pumpe eingesteckt werden. Solche Zusatzmodule können beispielsweise zusätzliche Steuerungs- oder Diagnosefunktionen bereitstellen, beispielsweise eine Datenkommunikation mit weiteren Steuerungseinrichtungen oder Pumpen. Die einzusetzenden Zusatzmodule werden über Kontakte bzw. Stecker mit der Elektronik in dem Klemmenkasten der Pumpe verbunden. Problematisch ist dabei, dass die Kontakte Umwelteinflüssen ausgesetzt sind, beispielsweise leicht korrodieren können, was zu Fehlfunktionen führen kann. Dies ist insbesondere deshalb problematisch, da derartige Pumpen häufig in feuchter Umgebung eingesetzt werden.

Es sind Pumpen bekannt, bei welchen die Kommunikation zwischen der Steuerungselektronik in dem Klemmenkasten und einem Zusatzmodul über eine Infrarotschnittstelle erfolgt. Doch kann auch bei solch einer Infrarotschnittstelle nicht vollständig auf Kontakte verzichtet werden, da zumindest Anschlüsse zur Energieversorgung des Zusatzmoduls vorgesehen werden müssen. Diese Kontakte sind weiterhin Umgebungseinflüssen ausgesetzt, was zu Störungen führen kann.

Die EP 0 664 399 A1 (D2) offenbart ein Pumpenaggregat, welches einen Drehzahlsteller aufweist, welcher mit einer Sende- und Empfangseinrichtung versehen ist, um den Drehzahlsteller über ein Bedienteil drahtlos einstellen zu können. Hierbei dient das Bedienteil lediglich zur Vornahme von Einstellungen an dem Drehzahlsteller, ist jedoch nicht zur ständigen Kommunikation mit dem Pumpenaggregat vorgesehen. Ferner muss das Bedienteil für seinen Betrieb eine separate Energieversorgung, beispielsweise eine Batterie aufweisen.

Es ist Aufgabe der Erfindung, eine verbesserte Pumpe mit einem elektrischen Antrieb zu schaffen, welche einen zuverlässigeren Anschluss eines Zusatzmoduls zur Steuerung und/oder Diagnose der Pumpe und elektrischen Anschluss der Pumpe selber ermöglicht.

Diese Aufgabe wird durch eine Pumpe mit den im Anspruch 1 angegebenen Merkmalen gelöst. Bevorzugte Ausführungsformen ergeben sich aus den Unteransprüchen.

Die erfindungsgemäße Pumpe weist einen elektrischen Antrieb auf, welcher beispielsweise über einen an der Pumpe angebrachten Klemmenkasten mit elektrischen Anschlussleitungen verbunden werden kann. Der Klemmenkasten ist vorzugsweise auf die Pumpe bzw. das Pumpengehäuse aufsteckbar, insbesondere axial aufsteckbar ausgebildet. In dem Klemmenkasten oder anderweitig in einem Gehäuse der Pumpe kann zusätzlich eine Steuer- bzw. Regelelektronik für den elektrischen Antrieb der Pumpe angeordnet sein. Erfindungsgemäß weist die Pumpe zusätzlich eine in der Nähe einer Gehäusewandung der Pumpe bzw. des Klemmenkastens angeordnete Spule auf. Die Spule kann beispielsweise in einem Klemmenkasten an der Innenseite nahe einer Auβenwandung des Klemmenkastens angeordnet sein. Alternativ kann die Spule auch an anderer Stelle in einem Gehäuse der Pumpe nahe einer Außenwandung angeordnet sein. Die Spule ist eingerichtet, eine kontaktlose Energieübertragung von der Pumpe zu einem externen Bauteil und/oder von einem externen Bauteil zu der Pumpe zu ermöglichen. Dazu wird die Spule derart an einer Stelle in Nähe der Gehäusewandung angeordnet, dass eine induktive Kopplung mit einem von außen an die Gehäusewandung angesetztem externem Bauteil möglich ist. Auf diese Weise ermöglicht die Spule beispielsweise eine kontaktlose Energieübertragung von der Pumpe bzw. der Steuer- bzw. Regelelektronik der Pumpe auf ein angesetztes Zusatzmodul. Dies ermöglicht, vollständig auf Kontakte zum Ansetzen eines Zusatzmodules zu verzichten, so dass sowohl die Elektronik in der Pumpe als auch das Zusatzmodul vollständig gekapselt werden können und beispielsweise eine Korrosion aufgrund von Feuchtigkeit in der Umgebung zuverlässig verhindert werden kann. Auf diese Weise kann eine zuverlässigere Verbindung eines Zusatzmoduls zu der Elektrik bzw. Elektronik der Pumpe gewährleistet werden. Alternativ oder zusätzlich ist es mittels der erfindungsgemäß angeordneten Spule ebenfalls möglich eine Energieübertragung von einem externen Bauteil zu der Pumpe zu ermöglichen. Dies ermöglicht einen kontaktlosen elektrischen Anschluss der Pumpe, welcher den Einbau der Pumpe vereinfacht, da keine besonderen Dichtungen und Isolierungen zur Abdichtung der Anschlussleitungen vorgesehen werden müssen. Es ist insbesondere beim Einsatz der Pumpe in feuchter Umgebung von Vorteil, da sämtliche elektrische Bauteile der Pumpe vorgefertigt wasserdicht gekapselt geliefert werden können und beim Zusammensetzen und Anschluss keine elektrischen Kontakte verbunden werden müssen. Die Energieübertragung erfolgt von dem externen Bauteil induktiv auf die in der Nähe der Gehäusewandung im Inneren der Pumpe angeordnete Spule. Das externe Bauteil ist vorzugsweise mit einer elektrischen Anschlussleitung verbunden und mit dieser dichtend vergossen oder verschweißt. Im Inneren des externen Bauteils kann eine Anschlusselektronik vorgesehen sein, welche die erforderlichen Spannungsregler und Spannungswandler aufweist, um eine induktive Energieübertragung auf die Pumpe zu ermöglichen.

Bevorzugt ist zumindest ein externes Bauteil in Form eines Zusatzmodules vorgesehen, wobei das Zusatzmodul mechanisch mit der Pumpe verbindbar ist und eine zu der Spule in der Pumpe korrespondierende Spule aufweist, welche eine kontaktlose Energieübertragung von der Pumpe zu dem Zusatzmodul ermöglicht. Die Energieübertragung erfolgt dabei induktiv in der Weise, dass von der Spule in der Pumpe ein magnetisches Feld erzeugt wird, welches in der zweiten Spule, welche in dem Zusatzmodul angeordnet ist, eine Spannung induziert. Die induzierte Spannung dient zur Spannungsversorgung der in dem Zusatzmodul vorgesehenen Elektronik. Auf diese Weise kann zwischen Pumpe und Zusatzmodul vollständig auf Kontakte verzichtet werden, da eine kontaktlose Energieübertragung durch zwei induktiv gekoppelte Spulen ermöglicht wird. Zwischen den beiden Spulen besteht dabei ein Spalt, in dem die Gehäusewandungen von Zusatzmodul und Pumpengehäuse liegen. In der Spule in der Pumpe und/oder in der Spule in dem Zusatzmodul kann ein Eisenkern angeordnet sein, wobei dies nicht unbedingt erforderlich ist. Die Spulen können als normal gewickelte Spulen oder auch als Flachspulen in Form von Folienspulen ausgebildet sein. Die Ausbildung als Flachspulen ermöglicht eine kostengünstige Herstellung, da die Spulen als Leiterbahnen gedruckt werden und flach an der Gehäusewandung gegenüberliegend zueinander angeordnet werden können. Die Frequenz der Versorgungsspannung der Spulen liegt vorzugsweise zwischen 50 und 1000 kHz, weiter bevorzugt zwischen 200 und 600 kHz.

Weiter bevorzugt ist in der Pumpe eine Kommunikationseinrichtung und in dem Zusatzmodul eine korrespondierende Kommunikationseinrichtung vorgesehen, welche eine kontaktlose Datenkommunikation zwischen Pumpe und Zusatzmodul ermöglichen. Durch die Kommunikationseinrichtung können beispielsweise Daten über Betriebszustände, Steuerbefehle und/oder Diagnosesignale von der Pumpe auf das Zusatzmodul oder auch von dem Zusatzmodul auf die Pumpe übertragen werden. Die kontaktlose Datenkommunikation ermöglicht dabei gemeinsam mit der kontaktlosen Energieübertragung, dass auf jegliche elektrische Kontakte zwischen Zusatzmodul und Pumpe verzichtet werden kann.

Die Kommunikationseinrichtungen sind vorzugsweise Infrarot- und/oder Funkschnittstellen. Die Infrarotschnittstellen ermöglichen eine Datenübertragung durch hochfrequente elektromagnetische Signale, während Funkschnittstellen eine Datenübertragung mittels niederfrequenter elektromagnetischer Signale ermöglicht.

Besonders bevorzugt dienen die zur Energieübertragung vorgesehenen Spulen in Pumpe und Zusatzmodul gleichzeitig als Kommunikationseinrichtungen zur Datenkommunikation. Dies bedeutet, das von den Spulen erzeugte elektromagnetische Feld wird so variiert, dass eine kodierte, vorzugsweise digitale Signalübertragung über die beiden Spulen ermöglicht wird. Eine solche Signalübertragung kann beispielsweise durch eine Amplituden- und/oder Frequenzvariation erfolgen. Als bevorzugt ist dazu der Spule in der Pumpe eine Frequenzsteuerung vorgeschaltet, welche die Frequenz der Spannung, welche an die Spule angelegt wird, variieren kann, wodurch ebenfalls die Frequenz des erzeugten magnetischen Feldes variiert wird.

Die Frequenzsteuerung ist vorzugsweise so eingerichtet, dass eine Datenübertragung von der Pumpe zu dem externen Bauteil durch eine Frequenzvariation bewirkt werden kann. Durch gezielte Änderung der Frequenz kann dem von der Spule erzeugten elektromagnetischen Feld ein kodiertes digitales Signal aufgeschaltet werden, welches von der zweiten Spule in den externen Bauteil empfangen und von einer angeschlossenen Elektronik ausgewertet werden kann. Entsprechend kann auch die Datenübertragung von dem externen Bauteil zu der Pumpe durch eine entsprechende Frequenzvariation erfolgen, wobei dazu der Spule in dem externen Bauteil eine entsprechende Frequenzsteuerung vorgeschaltet wird.

Weiter bevorzugt ist ein externes Bauteil vorgesehen mit einer Spule, welche zur Energieübertragung mit der Spule in der Pumpe zusammen wirkt, wobei der Spule in dem externen Bauteil ein Gleichrichter nachgeschaltet ist und die Pumpe und das externe Bauteil eingerichtet sind, eine Datenübertragung von dem externen Bauteil zu der Pumpe durch eine Belastungsvariation am Gleichrichterausgangssignal zu bewirken. Die so erzeugte Belastungsvariation bewirkt eine Amplitudenvariation des übertragenden elektromagnetischen Feldes und damit auch der Spannung in der Spule der Pumpe. Diese Amplitudenänderung kann von einer entsprechenden Auswerteelektronik in der Pumpe erfasst werden, so dass über diese Belastungsvariation eine kodierte, vorzugsweise digitale Signalübertragung von dem externen Bauteil auf die Pumpe möglich wird. Alternativ ist es auch möglich auf diese Weise eine Signalübertragung von der Pumpe auf das externe Bauteil zu bewirken, beispielsweise wenn das externe Bauteil zur Energieversorgung der Pumpe dient. In einem solchen Fall wird der Spule in der Pumpe ein entsprechender Gleichrichter nachgeschaltet und am Gleichesrichterausgangssignal eine Belastungsvariation in der beschriebenen Weise vorgenommen.

Um eine Belastungsvariation zu bewirken sind in dem externen Bauteil vorzugsweise ein elektronisch gesteuerter Schalter und ein Widerstand angeordnet. Durch den elektronischen Schalter kann ein Stromfluss durch den Widerstand ein- und ausgeschaltet werden, so dass auf diese Weise eine einem digitalen Signal entsprechende Belastungsvariation am Ausgang des Gleichrichters erzeugt werden kann. Im Fall, dass die Signalübertragung durch Belastungsvariation von der Pumpe auf das externe Bauteil erfolgen soll, kann ein entsprechender elektronischer Schalter mit einem Widerstand auch in der Pumpe vorgesehen werden.

Gemäß einer weiteren bevorzugten Ausführungsform ist ein externes Bauteil vorgesehen mit einer Spule, welche zur Energieübertragung mit der Spule in der Pumpe zusammenwirkt, wobei der Spule in dem externen Bauteil ein Gleichrichter und dem Gleichrichter ein Switch-Mode-Step-Down-Converter nachgeschaltet ist. Falls die Energieübertragung von dem externen Bauteil auf die Pumpe erfolgt, können ein Gleichrichter und der nachgeschaltete Switch-Mode-Step-Down-Converter auch in der Pumpe angeordnet sein. Der Switch-Mode-Step-Down-Converter dient in bekannter Weise der Spannungsregelung der Versorgungsspannung des externen Bauteils bzw. ggf. der Pumpe.

In dem Steuerkreis für den Switch-Mode-Step-Down-Converter sind vorzugsweise ein äußerer Spannungsregulator und ein innerer Stromregulator vorgesehen, wobei ein Kommunikationssignal am Ausgang des Spannungsregulators und am Eingang des Stromregulators aufgeschaltet wird. Der Ausgang des Spannungsregulators steht mit dem Eingang des Stromregulators in Verbindung und im Bereich dieser Verbindung wird das Kommunikationssignal, welches einem von dem externen Bauteil auf die Pumpe bzw. von der Pumpe auf das externe Bauteil zu übertragendem Kommunikationssignal entspricht, aufgeschaltet. Diese Anordnung zur Aufschaltung des Kommunikationssignals, auf das zwischen den Spulen bestehende magnetische Feld hat gegenüber der Belastungsvariation mittels eines Widerstandes den Vorteil, dass die Datenübertragung bzw. Kommunikation verlustfrei erfolgen kann. Die Verwendung eines Widerstandes zur Belastungsvariation bedeutet stets einen Verlust, während bei der Aufschaltung des Kommunikationssignals in dem Steuerkreis des Switch-Mode-Step-Down-Converters eine verlustfreie schnelle Variation der Ströme erreicht werden kann.

Gemäß einer weiteren bevorzugten Ausführungsform ist als externes Bauteil zumindest eine Energieversorgungseinheit vorgesehen, welche eine zu der in Pumpe angeordneten Spule korrespondierende Spule zur Energieübertragung von der Energieversorgungseinheit zu der Pumpe aufweist. Diese Anordnung ermöglicht eine kontaktlose Energieversorgung der Pumpe, so dass die gesamte Elektrik der Pumpe nach innen und außen vollständig gekapselt werden kann, so dass eine Korrosion durch Feuchtigkeit in der Umgebung sicher ausgeschlossen werden kann. Zur Kapselung nach innen gegenüber dem zu fördernden Fluid ist bevorzugt ein Spaltrohr vorgesehen. Auf diese Weise kann der gesamte Stator hermetisch gekapselt ausgebildet werden, ohne dass elektrische Anschlüsse oder mechanische, Bewegungen übertragende Elemente nach außen geführt werden müssen. Es müssen daher im Stator keine Öffnungen vorgesehen werden, welche mit Hilfe von Dichtungen abgedichtet werden müssen, um ein Eindringen des zufördernden Fluid bzw. von Feuchtigkeit zu verhindern. Die elektrische Energie zum Antrieb der Pumpe wird wie beschrieben durch die Energieversorgungseinheit kontaktlos auf den Stator übertragen. In dem Stator sind die Spulen angeordnet, welche magnetische Felder erzeugen, welche einen in dem Stator angeordneten Rotor, insbesondere einen Permamentmagnetrotor, in Bewegung versetzten. Das bedeutet, auch nach innen zum Rotor hin ist der Stator durch das Spaltrohr vollständig gekapselt und weist keine mechanischen oder elektrischen Verbindungen zur Energieübertragung wie Leitungen oder Wellen auf. Die gesamte Antriebselektrik der Pumpe kann somit gemeinsam mit dem Stator in einer Baueinheit hermetisch gekapselt werden, ohne dass nach innen oder außen Anschlussleitungen herausgeführt werden müssen. Das externe Bauteil, welches der Energieversorgung dient, kann seinerseits wiederum direkt mit einer Anschlussleitung verschweißt oder vergossen sein, welche an eine externe Stromversorgung oder Steuereinrichtung angeschlossen wird. Dies gewährleistet, dass beim Anschluss der Pumpe im Bereich der Pumpe keine elektrischen Kontakte verbunden werden müssen, so dass Fehler bei der Kontaktierung verhindert werden. Darüber hinaus kann eine Korrosion freiliegender Kontakte sicher ausgeschlossen werden, da die gesamte Elektrik der Pumpe und des externen Bauteils jeweils vollständig gekapselt werden können. Die Spule in dem externen Bauteil und die Spule in der Pumpe können gleichzeitig als Primär- und Sekondärspulen eines Transformators dienen, so dass bei der kontaktlosen Energieübertragung gleichzeitig eine Reduzierung der Spannung stattfinden kann. Auf diese Weise können ein zusätzlicher Transformator bzw. zusätzliche Spulen zur Energieübertragung eingespart werden.

Gemäß einer weiteren Ausführungsform der Erfindung ist die in der Pumpe vorgesehene Spule eine Transformatorspule eines in der Pumpe vorgesehenen Transformators zur Spannungswandlung, welcher zumindest eine Primärspule und eine Sekundärspule aufweist. Auf diese Weise kann eine zusätzliche Spule zur Energieübertragung von der Pumpe auf ein externes Bauteil eingespart werden. Es ist lediglich erforderlich, die Transformatorspule in der Pumpe bzw. einem Klemmenkasten so anzuordnen, dass eine induktive Ankupplung einer in dem externen Bauteil angeordneten Spule möglich ist. Dazu wird die entsprechende Transformatorspule vorzugsweise in der Nähe einer Gehäuseaußenwandung angeordnet.

Weiter bevorzugt weist der Transformator eine Primärspule und zumindest zwei Sekundärspulen auf. Auf diese Weise kann der Transformator zwei unterschiedliche Spannungen bereitstellen, beispielsweise eine Spannung zum Betrieb einer Steuerelektronik und eine Spannung für den Antriebsmotor der Pumpe. Das externe Bauteil wird mit seiner Spule bevorzugt induktiv an die Primärspule des Transformators angekoppelt. Es ist jedoch auch möglich die Spule des externen Bauteils induktiv an eine der Sekundärspulen des Transformators anzukoppeln.

Vorzugsweise ist in der Gehäusewandung der Pumpe eine Einbuchtung vorgesehen, wobei die Spule in der Pumpe die Einbuchtung umgibt, oder an der Gehäusewandung ist ein Vorsprung ausgebildet, wobei die Spule in dem Vorsprung angeordnet ist. Diese Ausgestaltung ermöglicht, dass die korrespondierende Spule in einem externen Bauteil bzw. Zusatzmodul konzentrisch zu der Spule in der Pumpe angeordnet werden kann.

Dazu ist vorzugsweise ein externes Bauteil vorgesehen, welches an einer Gehäusewandung eine Einbuchtung aufweist, wobei eine Spule in dem externen Bauteil die Einbuchtung umgibt, oder bei welchem an einer Gehäusewandung ein Vorsprung ausgebildet ist, wobei die Spule in dem Vorsprung angeordnet ist. Wenn das externe Bauteil einen Vorsprung mit einer darin angeordneten Spule aufweist, weist die zugehörige Pumpe in ihrem Gehäuse eine korrespondierende Einbuchtung auf, welche von der Spule in der Pumpe umgeben ist. Wird nun das externe Bauteil an die Pumpe angesetzt, greift der Vorsprung des externen Bauteils in die Einbuchtung an dem Gehäuse der Pumpe ein, so dass die Spule des externen Bauteils im Inneren der Spule der Pumpe zu liegen kommt. Umgekehrt ist es auch möglich das Pumpengehäuse mit einem entsprechenden Vorsprung zu versehen, welcher in einer Einbuchtung in dem externen Bauteil eingreift, so dass die Spule der Pumpe im Inneren der Spule des externen Bauteils zu liegen kommt.

Alternativ können die Spule in der Pumpe und/oder eine korrespondierende Spule in dem externen Bauteils flach ausgebildet sein und sich parallel zu der Gehäusewandung erstrecken. Eine solche Spule kann beispielsweise als Folienspule mit gedruckten Leiterbahnen kostengünstig gefertigt werden. Eine solche Flachspule kann leicht an einer planen Gehäusewand von der Innenseite her angebracht werden. Wenn in der Pumpe und dem externen Bauteil jeweils eine solche Flachspule vorgesehen sind, können diese so zueinander angeordnet werden, dass zwischen den Spulen lediglich die Gehäusewandungen von externem Bauteil und Pumpe bzw. Klemmenkasten gelegen sind und eine induktive Kopplung zwischen den beiden Spulen gegeben ist.

Nachfolgend wird die Erfindung beispielhaft anhand der beigefügten Figuren beschrieben. In diesen zeigt:
- Fig. 1: schematisch eine Pumpe mit einem Zusatzmodul in einer per spektivischen Ansicht,
- Fig. 2: eine Schnittansicht der Pumpe mit dem Zusatzmodul gemäß Figur 1,
- Fig. 3: eine perspektivische Ansicht eines Klemmenkastens einer Pumpe mit einem angesetzten Zusatzmodul,
- Fig. 4: eine weitere perspektivische Ansicht der Anordnung gemäß Figur 3,
- Fig. 5: ein schematischen elektrischen Schaltplan gemäß einer ersten Ausführungsform der Erfindung und
- Fig. 6: einen schematischem elektrischem Schaltplan gemäß einer zwei ten Ausführungsform der Erfindung.

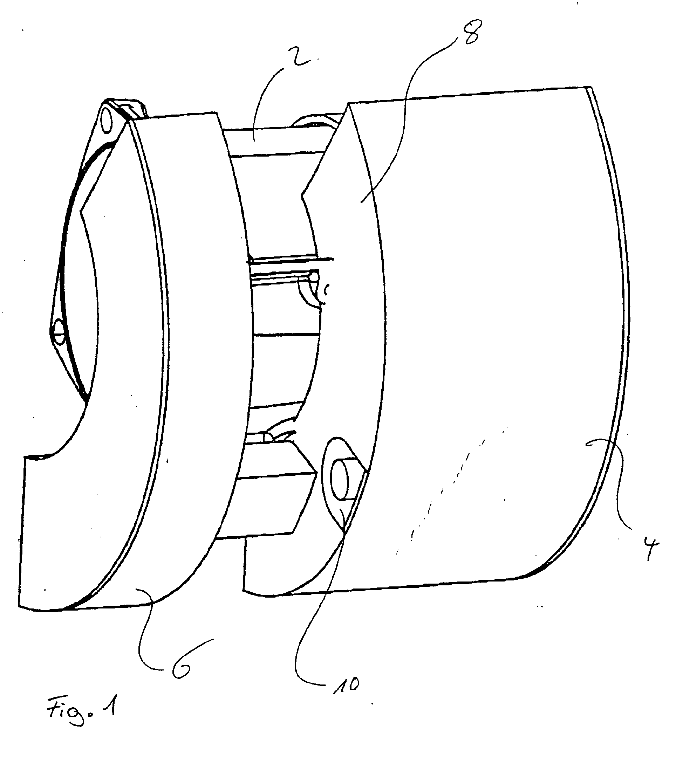

Figur 1 zeigt eine schematische Ansicht einer Pumpe 2 mit einem Klemmenkasten 4 und einem Zusatzmodul 6, welches an dem Klemmenkasten 4 angesetzt werden kann. Der Klemmenkasten 4 ist in bekannter Weise bogenförmig ausgebildet und umgibt die Pumpe 2 in einem Umfangssegment der Pumpe. Der Klemmenkasten 4 beinhaltet die erforderliche Ansteuer- bzw. Regelelektronik und die Anschlussklemmen für den Antrieb der Pumpe 2.

An den Klemmenkasten 4 können ein oder mehrere Zusatzmodule 6 angesetzt werden, welche beispielsweise weitere Elektronikkomponenten zur Steuerung der Pumpe enthalten können. So kann das Zusatzmodul 6 beispielsweise als Diagnosemodul dienen, welches bestimmte Betriebszustände de Pumpe erfasst. Derartige Zusatzmodule 6 können abhängig vom Einsatzzweck und Kundenwunsch modular an den Klemmkasten 4 angesetzt werden. Im in Fig. 1 gezeigtem Beispiel wird das Zusatzmodul 6 an eine Stirnseite des Klemmenkastens 4 angesetzt. Alternativ oder zusätzlich können der Klemmenkasten 4 und/oder das Zusatzmodul 6 so ausgestattet sein, dass ebenfalls an der entgegengesetzten Seite des Klemmenkastens 4 oder an das erste Zusatzmodul 6 weitere Zusatzmodule 6 angesetzt werden können.

An einer Stirnseite 8 des Klemmenkastens 4 ist eine ringförmige Ausnehmung 10 ausgebildet. An dem Zusatzmodul 6 ist ein zu der Ausnehmung 10 korrespondierender Vorsprung 12 ausgebildet.

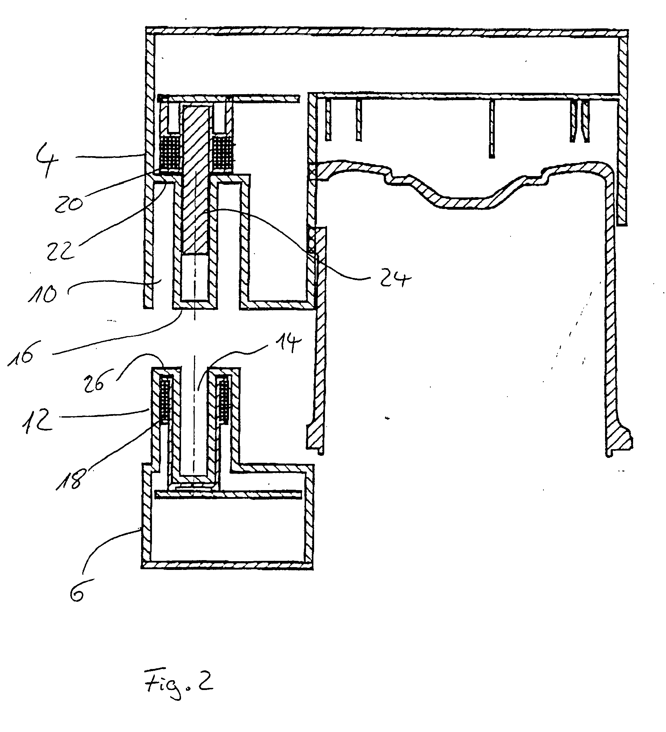

Figur 2 zeigt eine Schnittansicht des Klemmenkastens 4 und des Zusatzmodules 6 gemäß Figur 1. Der Vorsprung 12 an dem Zusatzmodul 6 weist eine zentrale Ausnehmung 14 auf, in welche der zentrale Zapfen 16 im Zentrum der ringförmigen Ausnehmung 10 eingreifen kann, wenn das Zusatzmodul 6 an den Klemmenkasten 4 gesteckt wird. Wenn das Zusatzmodul 6 an den Klemmenkasten angesteckt wird, greift der ringförmige Vorsprung 12 in die ringförmige Ausnehmung 10 ein. Im Inneren des ringförmigen Vorsprungs 12 ist eine Spule 18 angeordnet. Die Spule 18 ist ringförmig ausgebildet und umgibt die zentrale Ausnehmung 14. Dabei ist die Spule 18 im Bereich des äußeren freien Endes des Vorsprungs 12 angeordnet. Korrespondierend zu der Spule 18 ist in dem Klemmenkasten 4 eine Spule 20 am Boden der Ausnehmung 10 angeordnet. Dabei ist die Spule 20 im Inneren des Klemmenkastens 4 angeordnet und von der ringförmigen Ausnehmung 10 durch die Gehäusewandung 22 getrennt. Im Inneren der ringförmigen Spule 20 ist ein Eisenkern 24 angeordnet, welcher sich aus der Spule 4 heraus in das Innere des Zapfens 16 hineinerstreckt. Wenn das Zusatzmodul 6 an den Klemmenkasten 4 angesetzt wird und der Vorsprung 12 in die Ausnehmung 10 eingreift, wird die Spule 18 über der Spule 20 angeordnet. Die Spulen 18 und 20 sind dann lediglich durch die Gehäusewandung 22 des Klemmenkastens 4 und die Gehäusewandung 26 des Zusatzmodules 6 voneinander getrennt. Der Eisenkern 24 im Inneren des Zapfens 16 ragt dann in die Ausnehmung 14 und somit in das Innere der Spule 18 hinein, so dass die Spulen 18 und 20 induktiv gekoppelt sind. Wenn nun eine der Spulen 18 und 20 mit einer Wechselspannung beaufschlagt wird, wird in der jeweils anderen Spule eine entsprechende Spannung induziert. Somit ist es möglich von der Spule 20 auf die Spule 18 kontaktlos Energie zu übertragen, um eine in dem Zusatzmodul 6 angeordnete Elektronik mit elektrischer Energie zu versorgen. Die erforderliche Versorgunsspannung in dem Zusatzmodul 6 kann von der Spule 18 abgegriffen werden. Umgekehrt ist es auch möglich von dem Zusatzmodul 6 Energie auf die Spule 20 in dem Klemmenkasten 4 zu übertragen. Dies ist der Fall, wenn das Zusatzmodul 6 als Energieversorgungseinheit für die Pumpe ausgebildet ist, welche eine kontaktlose Energieversorgung ermöglichen soll. In diesem Fall würde die Spannung zum Antrieb des Pumpenmotors von der Spule 20 in dem Klemmkasten 4 abgegriffen, während die Spule 18 mit einer externen Stromversorgung in Verbindung steht.

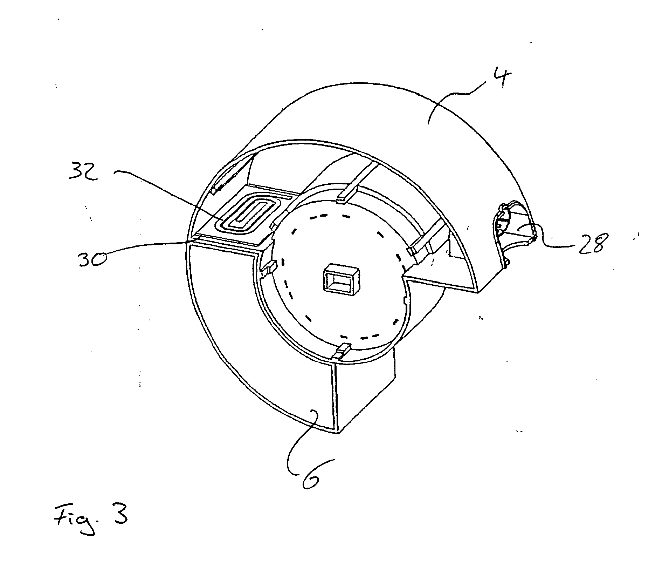

Figur 3 zeigt eine alternative Ausführungsform eines Klemmenkastens 4 mit angesetztem Zusatzmodul 6. Der Klemmenkasten 4 ist auch bei dieser Ausführungsform kreissegmentförmig ausgebildet und umgibt die Pumpe bzw. deren Antriebsmotor in einem Umfangsabschnitt. Das Zusatzmodul 6 ist ebenfalls kreisbogenförmig ausgebildet und schließt sich in Umfangsrichtung an den Klemmenkasten 4 an. Der Klemmenkasten 4 weist einen Anschlussstecker 28 zur Verbindung mit einer elektrischen Anschlussleitung auf. Im Inneren des Klemmenkastens 4 wird die erforderliche Elektrik bzw. Elektronik zum Ansteuern bzw. Regeln der Pumpe untergebracht. Dies können Spannungs- und Frequenzwandler und andere elektronische Bauteile sein. Ferner ist an der dem Zusatzmodul 6 zugewandten Seitenwand 30 des Klemmenkastens 4 eine Flachspule 32 ausgebildet. Die Flachspule 32 ist beispielsweise als Folienspule ausgebildet und erstreckt sich an der Innenseite des Klemmenkastens 4 parallel zu der Seitenwand 30. Die Folienspule 32 kann beispielsweise auf die Innenseite der Seitenwand 30 aufgeklebt oder in anderer geeigneter Weise befestigt sein, so dass sie im Wesentlichen plan an der Innenseite der Seitenwand 30 anliegt. Die Spule 32 dient zur Energieversorgung und Datenübertragung auf das Zusatzmodul 6, welches optional an den Klemmenkasten 4 angesetzt werden kann, um bestimmte Zusatzfunktionen je nach Kundenwunsch und Einsatzzweck bereitstellen zu können.

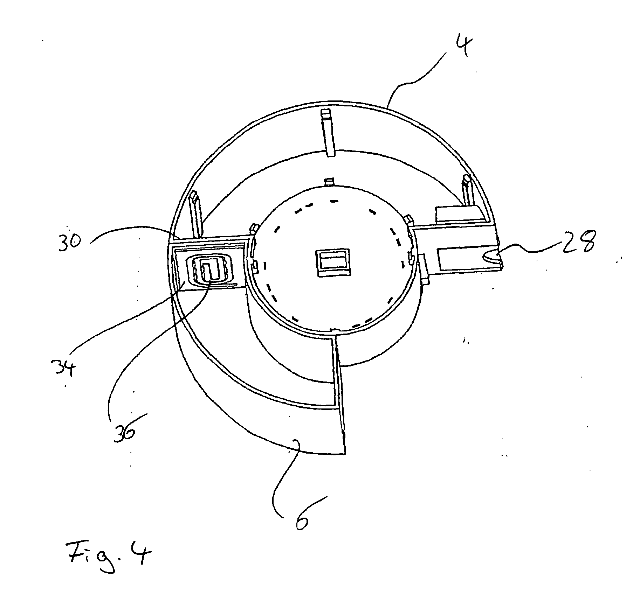

Figur 4 zeigt eine weitere perspektivische Ansicht des Klemmenkastens 4 mit dem Zusatzmodul 6 gemäß Figur 3. Dabei gewährt Figur 4 einen Blick in das Innere des geöffnet dargestellten Zusatzmoduls 6. Im Inneren des Zusatzmodules 6 ist an der der Seitenwand 30 des Klemmenkastens 4 zugewandten Seitenwand 34 eine weitere Flachspule 36 angeordnet. Auch die Flachspule 36 ist vorzugsweise als Folienspule ausgebildet, welche plan an der Seitenwand 34 anliegt. Zur Fixierung kann die Spule 36 beispielsweise auf die Seitenwand 34 aufgeklebt sein. Wenn das Zusatzmodul 6, welches lösbar mit dem Klemmenkasten 4 verbindbar ist, an den Klemmenkasten 4 angesetzt ist, kommen somit die Spulen 32 und 36 flach übereinander zu liegen, wobei in dem Spalt zwischen den Spulen 32 und 36 lediglich die Seitenwände 30 und 34 von Klemmenkasten 4 und Zusatzmodul 6 angeordnet sind. Dies ermöglicht eine induktive Energieübertragung von der Flachspule 32 auf die Flachspule 36 oder von der Flachspule 36 auf die Flachspule 32. Die Verwendung und Funktion der Spulen 32 und 36 entspricht dabei der Funktion der Spulen 18 und 20, welche anhand von Figur 2 erläutert wurden. Der Unterschied der Ausführungsformen gemäß Figur 2 und Figuren 3 und 4 liegt lediglich in der Form der Spulen 18, 20 bzw. 32 und 36. Während die Spulen 18 und 20 in üblicher Weise gewickelt sind, sind die Spulen 32 und 36 flach ausgebildet, d. h. die gesamte Wicklung erstreckt sich spiralförmig in einer Ebene. Ferner kann bei der Ausführungsform gemäß Figuren 3 und 4 auf einen Eisenkern verzichtet werden.

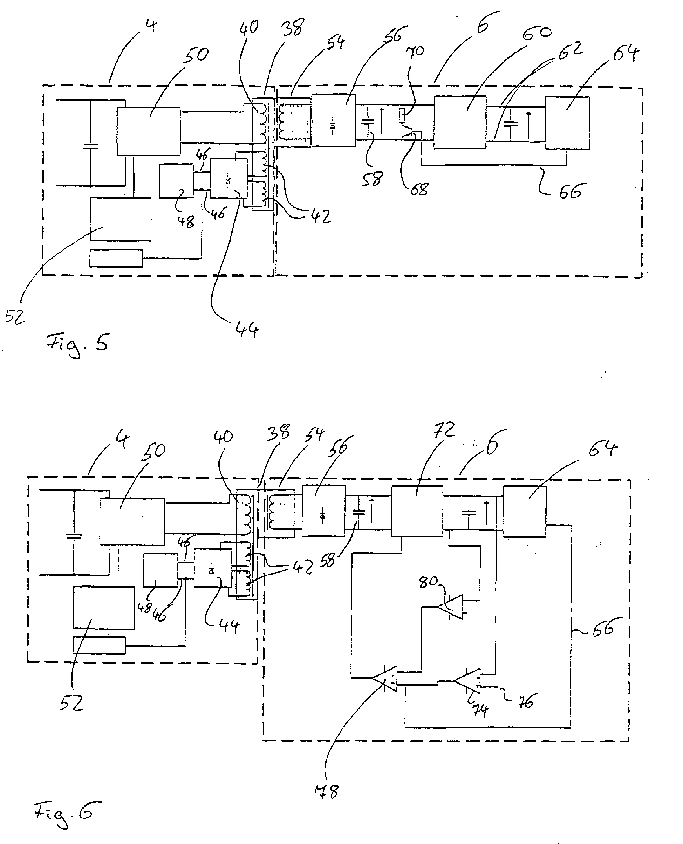

Anhand der Figuren 5 und 6 wird nachfolgend die Funktionsweise der Energie- und Datenübertragung über die Spulen in Klemmkasten 4 und Zusatzmodul 6 beschrieben.

Figur 5 zeigt schematisch den elektrischen Schaltplan gemäß einer ersten Ausführungsform der Erfindung. Durch die gestrichelten Linien abgegrenzt ist links der Klemmenkasten 4 mit den darin angeordneten Elektronikbauteilen und rechts das Zusatzmodul 6 mit den darin angeordneten Elektronikbauteilen gezeigt. In dem Klemmenkasten 4 ist ein Transformator 38 mit einer Primärspule 40 und zwei Sekundärspulen 42 angeordnet. Die zwei Sekundärspulen 42 dienen dazu, zwei unterschiedliche Spannungen für die Elektronik in dem Klemmenkasten 4 bereitzustellen. Den Sekundärspulen 42 ist ein Gleichrichter 44 nachgeschaltet, welcher zwei Ausgänge 46 aufweist, an welchen die zwei unterschiedlichen Spannungen anliegen. An die Ausgänge 46 sind die weiteren elektronischen Komponenten 48 zur Steuerung bzw. Regelung der Pumpe angeschlossen.

Der Primärspule 40 ist eine Frequenzsteuerung 50 bzw. ein Modul 50 zur Frequenzsteuerung vorgeschaltet. Die Frequenzsteuerung 50 steht in Verbindung mit einem Kommunikationsmodul 52, welches ein Kommunikationssignal erzeugt, entsprechend Daten, welche von dem Klemmenkasten 4 auf das Zusatzmodul 6 übertragen werden sollen. Dies können beispielsweise Daten sein, welche Informationen über einzelne Betriebszustände der Pumpe entsprechen. Das Kommunikationsmodul 52 gibt ein digitales Ausgangssignal aus, welches von der Frequenzsteuerung 50 in eine Frequenzvariation der an Primärspule 40 angelegten Spannung umgesetzt wird. Entsprechend ändert sich das von der Primärspule 40 erzeugte magnetische Feld, so dass die zu übertragenen Daten induktiv auf das Zusatzmodul 6 übertragen werden können.

In dem Zusatzmodul 6 ist eine Spule 54 angeordnet, welche induktiv mit der Primärspule 40 des Klemmenkastens 4 gekoppelt ist. Die Spule 54 kann dabei in Form der Spulen 18 oder 36 gemäß den Beispielen Figuren 1-4 ausgestaltet sein, während die Primärspule 40 den Spulen 20 oder 32 in den Beispielen gemäß Figur 1 entspricht.

Der Spule 54 in dem Zusatzmodul 6 ist ein Gleichrichter 56 nachgeschaltet, welcher die zur Versorgung der Elektronikbauteile in dem Zusatzmodul 6 erforderliche Gleichspannung abgibt. Die Energieversorgung des Zusatzmoduls 6 kann somit induktiv über die Spulen 40 und 54 erfolgen. Die Spule 40 erzeugt ein magnetisches Feld, welches in der Spule 54 eine Spannung induziert. Dabei wird die Spule 40 bevorzugt mit einer Frequenz zwischen 50 kHz und 600 kHz, vorzugsweise mit etwa 200 kHz angesteuert. Insbesondere für Niederspannung kann die an die Spule 40 angelegte Wechselspannung auch eine Frequenz bis zu 1000 kHz haben. Derart hohe Frequenzen ermöglichen, die für das Zusatzmodul 6 erforderliche Leistung induktiv zu übertragen. Die, von der Spule 40 in der Spule 54 induzierte Wechselspannung wird dem Gleichrichter 56 zugeführt, welcher an seinem Ausgang eine entsprechende Gleichspannung abgibt. Dem Gleichrichter 56 nachgeschaltet ist in bekannter Weise noch ein Kondensator 58 sowie ein Spannungsregler 60, welcher an seinen Ausgängen 62 eine geregelte Ausgangsspannung zur Versorgung der weiteren Elektronikbauteile 64 in dem Zusatzmodul 6 abgibt. Bestandteil der weiteren elektronischen Komponenten 64 ist ein Kommunikationsmodul, welches an seinem Ausgang 66 ein Kommunikationssignal abgibt, welches der Datenübertragung von dem Zusatzmodul 6 zu der Elektronik in dem Klemmenkasten 4 dient. Der Ausgang 66 des Kommunikationsmoduls ist mit einem elektronischen Schalter 68 verbunden, welcher den Widerstand 70 ansteuert. Durch den elektronischen Schalter 68 wird der Widerstand 70 mit dem dem Gleichrichter 56 nachgeschalteten Stromkreis verbunden oder von diesem getrennt. Somit kann durch Betätigung des elektronischen Schalters 68 über den Widerstand 70 eine ein- und ausschaltbare Belastung in dem dem Gleichrichter 56 nachgeschalteten Stromkreis erzeugt werden. Durch Ansteuerung des elektronischen Schalters 68 mit dem digitalen Kommunikationssignal an dem Ausgang 66 des Kommunikationsmoduls wird somit an der Ausgangsseite des Gleichrichters 56 eine dem Kommunikationssignal entsprechende Belastungsvariation durchgeführt, welche sich über die Spule 54 induktiv auf die Primärspule 40 überträgt, so dass auch in dem Stromkreis der Spule 40 eine entsprechende Belastungsvariation stattfindet. Diese Belastungsvariation in dem Stromkreis der Spule 40 wiederum kann von einem geeigneten Kommunikationsmodul (hier nicht gezeigt) in dem Klemmenkasten 4 erfasst werden. Auf diese Weise ist eine induktive Datenübertragung von dem Zusatzmodul 6 zu der Elektronik in dem Klemmkasten 4 durch Belastungsvariation bzw. Amplitudenmodulationen möglich. Wie bereits erläutert, erfolgt die Kommunikation in umgekehrter Richtung, d. h. von der Elektronik in den Klemmenkasten 4 zu dem Zusatzmodul 6 durch Frequenzvariationen mittels der Frequenzsteuerung 50. Energieübertragung und Kommunikation erfolgen über dieselben Spulen, so dass die Zahl der erforderlichen Bauteile minimiert wird.

Nachteilig bei der hier beschriebenen Belastungsvariation ist, dass durch den Widerstand 17 eine Verlustleistung erzeugt wird. Figur 6 zeigt eine Ausführungsform, welche diesen Nachteil vermeidet. Auch in Figur 6 sind die Komponenten des Klemmkastens 4 und des Zusatzmoduls 6 durch gestrichelte Linien zueinander abgegrenzt dargestellt. Der Aufbau der Komponenten in dem Klemmenkasten 4 entspricht dem anhand von Figur 5 beschriebenen Aufbau, weshalb an dieser Stelle auf eine nochmalige Beschreibung verzichtet wird.

Die Anordnung gemäß Figur 6 unterscheidet sich im Aufbau der Komponenten für die Spannungsversorgung und Datenübertragung in dem Zusatzmodul 6. In dem Zusatzmodul 6 ist ebenfalls eine Spule 54 angeordnet, welche induktiv an die Primärspule 40 des Transformators 38 ankoppelbar ist, wenn das Zusatzmodul 6 an den Klemmenkasten 4 angesetzt bzw. angesteckt wird. Der Spule 54 ist ein Gleichrichter 56 mit einem Kondensator 58 nachgeschaltet. Dem Gleichrichter 56 und Kondensator 58 nachgeschaltet ist ein Switch-Mode-Step-Down-Converter 72, welcher als Spannungsregler fungiert, um die Versorgungsspannung für die elektronischen Komponenten 64 in dem Zusatzmodul 6 zu regeln. Der Switch-Mode-Step-Down-Converter 72 ist ein Standartbauteil, welches eine regulierte Ausgangsspannung bereitstellt. Der Steuerkreis für den Switch-Mode-Step-Down-Converter 72 weist einen äußeren Spannungsregulator 74 auf, welcher die Ausgangsspannung des Switch-Mode-Step-Down-Converter 72 gegenüber einem Referenzwert 76 erfasst. Ferner weist der Regelkreis für den Switch-Mode-Step-Down-Converter 72 einen inneren Stromregulator 78 auf; an dessen Eingang zum einen das Ausgangssignal des Spannungsregulators 74 und zum anderen der Ausgang eines Strommesselementes 80 anliegt. Das Strommesselement 80 erfasst den Strom an der Ausgangsseite des Switch-Mode-Step-Down-Converters 72 gegenüber einem Referenzwert. Das Ausgangssignal des Stromregulators 78 dient als Regelsignal für den Switch-Mode-Step-Down-Converter 72.

Ferner ist in dem Zusatzmodul 6 gemäß der Ausführungsform in Figur 6 ebenfalls ein Kommunikationsmodul als Bestandteil der übrigen elektronischen Komponenten 64 des Zusatzmodules 6 vorgesehen. Ein am Ausgang 66 des Kommunikationsmoduls anliegendes Kommunikationssignal wird zwischen Ausgang des äußeren Spannungsregulators 74 und dem Eingang des inneren Stromregulators 78 auf den Regelkreis für den Switch-Mode-Step-Down-Converter 72 aufgeschaltet. Durch diese Aufschaltung des Kommunikationssignals wird in Abhängigkeit des digitalen Kommunikationssignals eine schnelle Variation der Ströme am Ausgang des Gleichrichters 56 erreicht. Diese schnelle Stromvariation ist im Gegensatz zu der Ausführungsform gemäß Figur 5 im Wesentlichen verlustfrei, da die schnelle Änderung der Ströme durch die dem Switch-Mode-Step-Down-Converter 72 vor- und nachgeschalteten Kondensatoren ausgeglichen wird. Wie anhand von Figur 5 beschrieben verursachen die Änderungen des Stroms am Ausgang des Gleichrichters 56 ebenfalls eine Änderung des Stroms in der Spule 54, welche induktiv auf die Spule 40 übertragen wird, so dass auch der Strom in der Primärspule 40 eine entsprechende Änderung erfährt, welche von einem entsprechenden Kommunikationsmodul (hier nicht gezeigt) im Klemmenkasten 4 erfasst werden kann. Auf diese Weise erfolgt auch bei dem Ausführungsbeispiel gemäß Figur 6 eine, allerdings im Wesentlichen verlustfreie, Datenkommunikation von dem Zusatzmodul 6 zu dem Klemmenkasten 4 durch eine Amplitudenvariation des übertragenen Signals. Die Kommunikation in umgekehrter Richtung, d. h. von dem Klemmkasten 4 zu dem Zusatzmodul 6 erfolgt, wie anhand von Figur 5 beschrieben, durch eine Frequenzvariation mit Hilfe der Frequenzsteuerung 50.

### Bezugszeichenliste

- 2: Pumpe
- 4: Klemmenkasten
- 6: Zusatzmodul
- 8: Stirnseite
- 10: Ausnehmung
- 12: Vorsprung
- 14: Ausnehmung
- 16: Zapfen
- 18, 20: Spulen
- 22: Gehäusewandung
- 24: Eisenkern
- 26: Gehäusewandung
- 28: Ausschlussstecker
- 30: Seitenwand
- 32: Flachspule
- 34: Seitenwand
- 36: Flachspule
- 38: Transformator
- 40: Primärspule
- 42: Sekundärspulen
- 44: Gleichrichter
- 46: Ausgänge
- 48: Elektronische Komponenten
- 50: Frequenzsteuerung
- 52: Kommunikationsmodul
- 54: Spule
- 56: Gleichrichter
- 58: Kondensator
- 60: Spannungsregler
- 62: Ausgänge
- 64: elektronische Komponenten
- 66: Ausgang
- 68: elektronischer Schalter
- 70: Widerstand
- 72: Switch-Mode-Step-Down-Converter
- 74: Spannungsregulator
- 76: Referenz
- 78: Stromregulator
- 80: Strommesselement

## Patentansprüche

1. Pumpe mit einem elektrischen Antrieb, **dadurch gekennzeichnet, dass** sie zumindest eine in der Nähe einer Gehäusewandung (22; 30) der Pumpe oder eines an der Pumpe angebrachten Klemmenkastens angeordnete Spule (20; 32; 40) aufweist, welche eingerichtet ist,
eine kontaktlose Energieübertragung von der Pumpe (2) zu einem externen Zusatzmodul (6), welches Elektronikkomponenten zur Steuerung und/oder Diagnose der Pumpe enthält und mechanisch mit der Pumpe verbindbar ist, zur Versorgung der Elektronikkomponenten mit elektrischer Energie
und/oder von einem externen Bauteil (6) zu der Pumpe (2) zum kontaktlosen elektrischen Anschluss der Pumpe (2) zu ermöglichen.

2. Pumpe nach Anspruch 1, **dadurch gekennzeichnet, dass** zumindest ein externes Bauteil in Form eines Zusatzmoduls (6) vorgesehen ist, wobei das Zusatzmodul (6) mechanisch mit der Pumpe verbindbar ist und eine zu der Spule (20; 32; 40) in der Pumpe (2) korrespondierende Spule (18; 36; 54) aufweist, welche eine kontaktlose Energieübertragung von der Pumpe (2) zu dem Zusatzmodul (6) ermöglicht.

3. Pumpe nach Anspruch 2, **dadurch gekennzeichnet, dass** in der Pumpe (2) eine Kommunikationseinrichtung und in dem Zusatzmodul (6) eine korrespondierende Kommunikationseinrichtung vorgesehen sind, welche eine kontaktlose Datenkommunikation zwischen Pumpe und Zusatzmodul ermöglichen.

4. Pumpe nach Anspruch 3, **dadurch gekennzeichnet, dass** die Kommunikationseinrichtungen Infrarot- und/oder Funkschnittstellen sind.

5. Pumpe nach Anspruch 3 oder 4, **dadurch gekennzeichnet, dass** die zur Energieübertragung vorgesehenen Spulen (20, 18; 32, 36; 40, 54) in Pumpe (2) und Zusatzmodul (6) gleichzeitig als Kommunikationseinrichtung zur Datenkommunikation dienen.

6. Pumpe nach einem der vorangehenden Ansprüche, **dadurch gekennzeichnet, dass** der Spule (20; 32; 40) in der Pumpe (2) eine Frequenzsteuerung (50) vorgeschaltet ist.

7. Pumpe nach Anspruch 6, **dadurch gekennzeichnet, dass** die Frequenzsteuerung (50) eingerichtet ist, eine Datenübertragung von der Pumpe (2) zu dem externe Bauteil (6) durch eine Frequenzvariation zu bewirken.

8. Pumpe nach einem der vorangehenden Ansprüche, **dadurch gekennzeichnet, dass** ein externes Bauteil (6) vorgesehen ist, mit einer Spule (54), welche zur Energieübertragung mit der Spule (40) in der Pumpe (2) zusammenwirkt, wobei der Spule (54) in dem externen Bauteil (6) ein Gleichrichter (56) nachgeschaltet ist und die Pumpe (2) und das externe Bauteil (6) eingerichtet sind, eine Datenübertragung von dem externen Bauteil (6) zu der Pumpe (2) durch eine Belastungsvariation am Gleichrichterausgangssignal zu bewirken.

9. Pumpe nach Anspruch 8, **dadurch gekennzeichnet, dass** in dem externen Bauteil (6) ein elektronisch gesteuerter Schalter (68) und ein Widerstand (70) angeordnet sind, um eine Belastungsvariation zu bewirken.

10. Pumpe nach einem der vorangehenden Ansprüche, **dadurch gekennzeichnet, dass** ein externes Bauteil (6) vorgesehen ist mit einer Spule (54), welche zur Energieübertragung mit der Spule (40) in der Pumpe (2) zusammenwirkt, wobei der Spule (54) in dem externen Bauteil (6) ein Gleichrichter (56) und dem Gleichrichter (56) ein Switch-Mode-Step-Down-Converter (72) nachgeschaltet ist.

11. Pumpe nach Anspruch 10, **dadurch gekennzeichnet, dass** in dem Steuerkreis für den Switch-Mode-Step-Down-Converter (72) ein äuβerer Spannungsregulator (74) und ein innerer Stromregulator (78) vorgesehen sind und ein Kommunikationssignal (66) am Ausgang des Spannungsregulators (74) und am Eingang des Stromregulators (78) aufgeschaltet ist.

12. Pumpe nach einem der vorangehenden Ansprüche, **dadurch gekennzeichnet, dass** als externes Bauteil (6) zumindest eine Energieversorgungseinheit vorgesehen ist, welche eine zu der in der Pumpe (2) angeordneten Spule (20; 32) korrespondierende Spule (18; 36) zur Energieübertragung von der Energieversorgungseinheit zu der Pumpe (2) aufweist.

13. Pumpe nach einem der vorangehenden Ansprüche, **dadurch gekennzeichnet, dass** die in der Pumpe (2) vorgesehene Spule (40) eine Transformatorspule eines in der Pumpe (2) vorgesehenen Transformators (38) zur Spannungswandlung ist, welcher zumindest eine Primärspule und eine Sekundärspule (42) aufweist.

14. Pumpe nach Anspruch 13, **dadurch gekennzeichnet, dass** der Transformator (38) eine Primärspule (40) und zumindest zwei Sekundärspulen (42) aufweist.

15. Pumpe nach einem der vorangehenden Ansprüche, **dadurch gekennzeichnet, dass** in der Gehäusewandung (22) der Pumpe (2) eine Einbuchtung (10) vorgesehen ist, wobei die Spule in der Pumpe die Einbuchtung umgibt, oder an der Gehäusewandung (22) ein Vorsprung ausgebildet ist, wobei die Spule in dem Vorsprung angeordnet ist.

16. Pumpe nach einem der vorangehenden Ansprüche, **dadurch gekennzeichnet, dass** ein externes Bauteil (6) vorgesehen ist, welches an einer Gehäusewandung (26) eine Einbuchtung aufweist, wobei eine Spule in dem externen Bauteil die Einbuchtung umgibt, oder bei welchem an einer Gehäusewandung (26) ein Vorsprung (12) ausgebildet ist, wobei die Spule (18) in dem Vorsprung (12) angeordnet ist.

17. Pumpe nach einem der vorangehenden Ansprüche, **dadurch gekennzeichnet, dass** die Spule (32) in der Pumpe (2) und/oder eine korrespondierende Spule (36) in dem externen Bauteil (6) flach ausgebildet ist und sich parallel zu der Gehäusewandung (30; 34) erstreckt.

## Claims

1. A pump with an electric drive, **characterised in that** it comprises at least one coil (20; 32; 40) which is arranged in the proximity of a housing wall (22; 30) of the pump or of a terminal box attached on the pump, which is configured to permit
a contactless energy transmission from the pump (2) to an external additional module (6) which comprises electronics components for the control and/or diagnosis of the pump and is mechanically connectable to the pump, for the supply of the electrical components with electrical energy
and/or from an external component (6) to the pump (2) for the contactless electrical connection of the pump (2).

2. A pump according to claim 1, **characterised in that** at least one external component in the form of an additional module (6) is provided, wherein the additional module (6) is mechanically connectable to the pump and comprises a coil (18; 36; 54) which interacts with the coil (20; 32 40) in the pump (2) and which permits a contactless energy transmission from the pump (2) to the additional module (6).

3. A pump according to claim 2, **characterised in that** a communication device is provided in the pump (2), and an interacting communication device is provided in the additional module (6), and these communication devices permit a contactless data communication between the pump and the additional module.

4. A pump according to claim 3, **characterised in that** the communication devices are infrared and/or radio interfaces.

5. A pump according to claim 3 or 4, **characterised in that** the coils (20, 18; 32, 36; 40, 54) in the pump (2) and in the additional module (6) and which are provided for energy transmission simultaneously serve as a communication device for data communication.

6. A pump according to one of the preceding claims, **characterised in that** a frequency control (50) is connected in series in front of the coil (20; 32; 40) in the pump (2).

7. A pump according to claim 6, **characterised in that** frequency control (50) is configured to effect a data transmission from the pump (2) to the external component (6) by way of a frequency variation.

8. A pump according to one of the preceding claims, **characterised in that** an external component (6) is provided, with a coil (54) which cooperates with the coil (40) in the pump (2) for energy transmission, wherein a rectifier (54) is connected in series after the coil (54) in the external component (6), and the pump (2) and the external component (6) are configured to effect a data transmission from the external component (6) to the pump (2) by way of a loading variation on the rectifier output signal.

9. A pump according to claim 8, **characterised in that** an electronically controlled switch (68) and a resistor (70) are arranged in the external component (6), in order to effect a loading variation.

10. A pump according to one of the preceding claims, **characterised in that** an external component (6) is provided, with a coil (54) which cooperates with the coil (40) in the pump (2) for energy transmission, wherein a rectifier (56) is connected in series after the coil (54) in the external component (2), and a switch-mode step-down converter (72) is connected in series after the rectifier (56).

11. A pump according to claim 10, **characterised in that** an external voltage regulator (74) and an internal current regulator (78) are provided in the control circuit for the switch-mode step-down converter (72), and a communication signal (66) is entered at the output of the voltage regulator (74) and at the input of the current regulator (78).

12. A pump according to one of the preceding claims, **characterised in that** at least one energy supply unit is provided as an external component (6) and comprises a coil (18; 36) which interacts with the coil (20; 32) arranged in the pump (2) and is for the energy transmission from the energy supply unit to the pump (2).

13. A pump according to one of the preceding claims, **characterised in that** the coil (40) provided in the pump (2) is a transformer coil of a transformer (38) which is provided in the pump (2) and is for voltage transformation and comprises at least one primary coil and a secondary coil (42).

14. A pump according to claim 13, **characterised in that** the transformer (38) comprises a primary coil (40) and at least two secondary coils (42).

15. A pump according to one of the preceding claims, **characterised in that** an indentation (10) is provided in the housing wall (22) of the pump (2), wherein the coil in the pump surrounds the indentation, or a projection is formed on the housing wall (22), wherein the coil is arranged in the projection.

16. A pump according to one of the preceding claims, **characterised in that** an external component (6) is provided, which comprises an indentation on a housing wall (26), wherein a coil in the external component surrounds the indentation, or with which a projection (12) is formed on housing wall (26), wherein the coil (18) is arranged in the projection (12).

17. A pump according to one of the preceding claims, **characterised in that** the coil (32) in the pump (2) and/or an interacting coil (36) in the external component (6) is designed in a flat manner and extends parallel to the housing wall (30; 34).

## Revendications

1. Pompe à commande électrique, **caractérisée en ce qu'**elle comprend au moins une bobine (20 ; 32 ; 40) disposée à proximité d'une paroi de carter (22 ; 30) de la pompe ou d'une boîte à bornes placée sur la pompe, laquelle bobine est configurée pour permettre
un transfert d'énergie sans contact de la pompe (2) vers un module supplémentaire externe (6) qui contient des composants électroniques de commande et/ou de diagnostic de la pompe et peut être raccordé mécaniquement à la pompe, pour alimenter les composants électroniques en énergie électrique,
et/ou d'un composant externe (6) vers la pompe (2) pour le raccordement électrique sans contact de la pompe (2).

2. Pompe selon la revendication 1, **caractérisée en ce qu'**au moins un composant externe est prévu sous la forme d'un module supplémentaire (6), le module supplémentaire (6) pouvant être relié mécaniquement à la pompe et comportant une bobine (18 ; 36 ; 54) correspondant à la bobine (20 ; 32 ; 40) prévue dans la pompe (2), qui permet un transfert d'énergie sans contact de la pompe (2) vers le module supplémentaire (6).

3. Pompe selon la revendication 2, **caractérisée en ce que** sont prévus dans la pompe (2) un dispositif de communication et dans le module supplémentaire (6) un dispositif de communication correspondant, qui permettent une communication de données sans contact entre la pompe et le module supplémentaire.

4. Pompe selon la revendication 3, **caractérisée en ce que** les dispositifs de communication sont des interfaces infrarouge et/ou radio.

5. Pompe selon la revendication 3 ou 4, **caractérisée en ce que** les bobines (20, 18 ; 32, 36 ; 40, 54) prévues dans la pompe (2) et dans le module supplémentaire (6) pour le transfert d'énergie servent également de dispositif de communication pour la communication de données.

6. Pompe selon l'une des revendications précédentes, **caractérisée en ce qu'**une commande de fréquence (50) est montée en amont de la bobine (20 ; 32 ; 40) prévue dans la pompe (2).

7. Pompe selon la revendication 6, **caractérisée en ce que** la commande de fréquence (50) est configurée pour provoquer un transfert de données de la pompe (2) vers le composant externe (6) par une variation de fréquence.

8. Pompe selon l'une des revendications précédentes, **caractérisée en ce qu'**est prévu un composant externe (6) comportant une bobine (54) qui coopère avec la bobine (40) prévue dans la pompe (2) pour le transfert d'énergie, un redresseur (56) étant monté en aval de la bobine (54) prévue dans le composant externe (6), et la pompe (2) et le composant externe (6) étant configurés pour opérer un transfert de données du composant externe (6) vers la pompe (2) par une variation de charge sur le signal de sortie du redresseur.

9. Pompe selon la revendication 8, **caractérisée en ce qu'**un commutateur à commande électronique (68) et une résistance (70) sont disposés dans le composant externe (6) pour provoquer une variation de charge.

10. Pompe selon l'une des revendications précédentes, **caractérisée en ce qu'**est prévu un composant externe (6) comportant une bobine (54) qui coopère avec la bobine (40) prévue dans la pompe (2) pour le transfert d'énergie, un redresseur (56) étant monté en aval de la bobine (54) prévue dans le composant externe (6) et un convertisseur buck *«(Switch-mode-step-down converter*») (72) étant monté en aval du redresseur (56).

11. Pompe selon la revendication 10, **caractérisée en ce que** sont prévus dans le circuit de commande du convertisseur buck (72) un régulateur de tension extérieur (74) et un régulateur de courant intérieur (78), et **en ce qu'**un signal de communication (66) est appliqué à la sortie du régulateur de tension (74) et à l'entrée du régulateur de courant (78).

12. Pompe selon l'une des revendications précédentes, **caractérisée en ce qu'**est prévu comme composant externe (6) au moins une unité d'alimentation en énergie qui présente une bobine (18 ; 36) correspondant à la bobine (20 ; 32) disposée dans la pompe (2) pour le transfert d'énergie de l'unité d'alimentation en énergie vers la pompe (2).

13. Pompe selon l'une des revendications précédentes, **caractérisée en ce que** la bobine (40) prévue dans la pompe (2) est une bobine d'un transformateur (38) prévu dans la pompe (2) pour la conversion de tension, lequel présente au moins une bobine primaire et une bobine secondaire (42).

14. Pompe selon la revendication 13, **caractérisée en ce que** le transformateur (38) comporte une bobine primaire (40) et au moins deux bobines secondaires (42).

15. Pompe selon l'une des revendications précédentes, **caractérisée en ce qu'**un renfoncement (10) est prévu dans la paroi de carter (22) de la pompe (2), la bobine présente dans la pompe entourant le renfoncement, ou **en ce qu'**une saillie est formée sur la paroi de carter (22), la bobine étant disposée dans la saillie.

16. Pompe selon l'une des revendications précédentes, **caractérisée en ce qu'**est prévu un composant externe (6) qui présente un renfoncement sur une paroi de carter (26), la bobine présente dans le composant externe entourant le renfoncement, ou **en ce qu'**une saillie (12) est formée sur une paroi de carter (26), la bobine (18) étant disposée dans la saillie (12).

17. Pompe selon l'une des revendications précédentes, **caractérisée en ce que** la bobine (32) de la pompe (2) et/ou une bobine correspondante (36) du composant externe (6) est de forme plane et s'étend parallèlement à la paroi de carter (30 ; 34).
